# EUROPEAN PATENT APPLICATION

(11) **EP 2 291 010 A1**
(43) Date of publication of application: **02.03.2011**
(21) Application number: 09757091.5
(22) Date of filing: 05.06.2009
(51) Int. Cl.: H04W 4/00

(54) **STRUCTURE PROCESSING METHOD AND APPARATUS FOR LAYOUT FILE**

(30) Priority: 05.06.2008 CN 200810114437
(71) Applicant: Peking University Founder Group Co., Ltd, Haidian District Beijing 100871 (CN); Beijing Founder Apabi Technology Limited, Beijing 100080 (CN); Peking University, Beijing 100871 (CN)
(72) Inventor: QIU, Ruiheng, Beijing 100080 (CN); WANG, Yi, Beijing 100080 (CN); TANG, Zhi, Beijing 100080 (CN)
(74) Representative: Novagraaf Technologies
(86) International application number: PCT/CN2009/072147
(87) International publication number: WO 2009/146657

(57) **Abstract**

Disclosed are a method and a device for processing the structure of a layout file, comprising: obtaining document content structure information and/or document layout exhibition information of the layout file; dividing document contents of the layout file into content blocks according to the document content structure information and/or the document layout exhibition information; and creating document flow information of the layout file according to the divided content blocks.

## Description

### TECHNICAL FIELD

The invention belongs to the field of computer information processing and relates to methods and devices for processing the structure of a layout file.

### BACKGROUND

A conventioanl layout file is often described in a absolute manner. In a user-defined coordinate system, the display position and size for each document are definitely recorded so that the printed result of a document is consistent with the displayed result of the document on a computer. In addition, the document is displayed consistently in different computers so as to ensure that the document is truly reproduced. For example, the PDF file is a typical layout file. An electronic document in the manner of layout file is adapted to be published and transferred due to the stability of the layout file. Therefore, the layout file is widely used in the fields of electronic official documents, electronic books, electronic journals, electronic newspapers and so on.

With the popularization of computer technology and the development of information technology, the amount of layout files is greatly increased. Meanwhile, the types of client terminals are increased, for example, the PDA, the smart phone, and so on. Users require that layout files can be conveniently read at many kinds of client terminals. Therefore, it requires that client terminals can overcome the limitation of the invariance of displaying a layout file and rearrange the contents of a layout file according to the size of the screen of the display device.

In research works, the inventors found that it is not convenient to process (such as edit) the structure of a layout file since it uses absolute values to accurately define the display position and size of each document. For example, each time after document contents are amended, it requires to re-compute the layout and re-write the layout information of the whole document. However, it is very difficult to re-compute the layout and re-write the layout information for the document display position and size described only with absolute values. In addition, it is also difficult to perform edtion operations (such as searching, structurized storing, modifying, extracting, and the like) on contents of the layout file.

### SUMMARY

In view of the above, the present invention provides methods and devices for processing the structure of a layout file to describe the document flow information of the layout file and process the structure of the layout file. After the document contents are amended, it is easy to update information such as the document structure of the file, the layout of the file and the like. In addition, operations (such as searching, structurized storing, modifying, extracting, rearranging, and the like) on contents of the layout file are achieved.

An embodiment off the invention provides a method for processing a structure of a layout file, comprising: obtaining document content structure information and/or document layout exhibition information of the layout file; dividing document contents of the layout file into content blocks according to the document content structure information and/or the document layout exhibition information; and creating document flow information of the layout file according to the divided content blocks.

Another embodiment of the invention provides a device for processing a structure of a layout file, comprising: a module for obtaining original information, which is used to obtain document content structure information and/or document layout exhibition information of the layout file; a module for dividing into content blocks, which is used to divide document contents of the layout file into content blocks according to the document content structure information and/or the document layout exhibition information; and a module for describing document flow information, which is used to creat document flow information of the layout file according to the divided content blocks.

The above embodiments have at least one of the following advantages.

The document flow information of a layout file is obtained. According to the obtained document flow information, the document contents of the layout file are divided into content blocks. Then, the content block division result information is described. According to the obtained content block division result information, the document flow information of the layout file based on the divided content blocks is described, so that it is easy to process the structure of the layout file. For example, after the document contents are amended, it is easy to update information such as the document structure of the file, the layout of the file and the like. In addition, it is more flexible and easier to perform edtion operations (such as searching, structurized storing, modifying, extracting, and the like) on contents of the layout file.

### BRIEF DESCRIPTION OF THE DRAWINGS

The present invention is not limited to the descriptions and embodiments described hereinafter with reference to the appended drawings, wherein

Figure 1 is a flowchart showing a method for processing the structure of a layout file according to an embodiment of the invention;

Figure 2 is a schematic view showing the document flow information of a layout file based on the divided content blocks according to an embodiment of the invention;

Figure 3 is a schematic view showing a layout file and its content description according to an embodiment of the invention;

Figure 4 is a schematic view showing the manner of dividing the layout file shown in Figure 3 into content blocks according to an embodiment of the invention;

Figure 5 is a schematic view showing the content block division result information of the layout file shown in Figure 3 according to an embodiment of the invention;

Figure 6 is a schematic view showing the document structure information in the document flow information after the layout file shown in Figure 3 is divided into content blocks according to an embodiment of the invention;

Figure 7 is a schematic view showing the self-adaption exhibition information of the document layout in the document flow information after the layout file shown in Figure 3 is divided into content blocks according to an embodiment of the invention;

Figure 8 is a schematic view showing the rearranged contents of the document layout in the document flow information after the layout file shown in Figure 3 is divided into content blocks according to an embodiment of the invention;

Figure 9 is a schematic view showing the device for processing the structure of a layout file according to an embodiment of the invention; and

Figure 10 is a schematic view showing the division of document contents of a layout file into content blocks in the manner of using division content reference sequence according to an embodiment of the invention.

### DETAILED DESCRIPTION OF EMBODIMENTS

Hereinafter, a detailed description of embodiments of the present invention will be given with reference to the appended drawings.

In an embodiment of the present invention, firstly, the original information of a layout file is obtained and the document contents of the layout file is divided into a plurality of content blocks according to the obtained original information. Then, the document flow information of the layout file which has been divided into the plurality of content blocks is described according to the divided content blocks, so that the structure of the layout file may be easily processed. For example, after the document contents are amended, it is easy to update information such as the document structure of the file, the layout of the file and the like. In addition, it is more flexible and easier to perform edtion operations (such as searching, structurized storing, modifying, extracting, and the like) on contents of the layout file.

The embodiments of the present invention will be described in details with reference to the appended drawings.

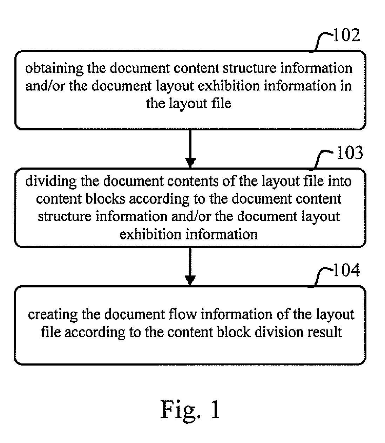

Fig. 1 is a flowchart showing a method for processing the structure of a layout file, which comprises the following steps.

Step 102 is to obtain the document content structure information and/or the document layout exhibition information of a layout file. The layout file mentioned herein may refer to either a whole layout file or one or more pages in a whole layout file. The original information of a layout file refers to the document content structure information and/or the document layout self-adaption exhibition information in the layout file, including but not limited to the following three kinds of information.

The first kind of the information is document content structure information, including the chapter information of a document, the sequence of content blocks in a chapter and the sequence of graphic elements in a content block.

The second kind of the information is reading clue information, which refers to additional reading sequence information provided according to specific requirements, except for the reading sequence provided by the document content structure information mentioned above. The reading clue information is optional reading sequence information provided to users and may be either reading sequence information of all document contents of a layout file or reading sequence information of partial document contents of a layout file.

The third kind of the information is layout information, which refers to the information determining the final exhibition effect of the graphic elements when the layout of a layout file is rearranged. The layout information includes the layout attribute of a graphic element itself or a content block itself, and the layout relationship among the graphic elements of a content block or among content blocks, for example, the manner of setting characters off a designated picture and the column information of designated content blocks. The above-mentioned layout rearrangement refers to a process in which the graphic elements in the layout are re-organized according to a certain rule so as to form a layout exhibition result when the layout size or content is changed.

According to an embodiment of the present invention, the document content structure information and/or the document layout exhibition information of a layout file may be obtained in one or more of the following manners.

Where an electronic document containing document content structure information and/or document layout exhibition information serves as the document content source for a layout file, the document content structure information and/or the document layout exhibition information of the layout file may be obtained directly by analyzing the source of various document contents of the layout file. For example, for an electronic document (e.g. HTML and Microsoft Word) corresponding to a layout file and containing partial document content structure information and/or document layout exhibition information, the document processing system of the document may be used to extract the document content structure information and/or the document layout exhibition information in the electronic document. Specifically, for a document in Microsoft Word format, Office Automation Object may be used to obtain the document content structure information and/or document layout exhibition information of the document.

Where an electronic document not containing document content structure information and/or document layout exhibition information serves as the document content source for a layout file, various recognition algorithms or intelligent comprehension algorithms may be used to compute the layout file to obtain the document content structure information and/or the document layout exhibition information of the layout file. For example, a processing system based on document analyzation and document comprehension may be used to compute the layout file to obtain the document content structure information and/or the document layout exhibition information of the layout file.

Where an electronic document not containing document content structure information and/or document layout exhibition information serves as the document content source for a layout file, the document content structure information and/or the document layout exhibition information in the layout file may be obtained by receiving the document content structure information and/or document layout exhibition information inputted for the layout file by an user in external. For example, a user may mark the document contents of a layout file via a computer application program having a graphic interface, so as to input the document content structure information and/or the document layout exhibition information of the layout file.

Step 103 is to divide the document contents of the layout file into content blocks according to the document content structure information and/or the document layout exhibition information.

The document contents of a layout file can be divided into a plurality of content blocks by a method based on direct organization for the layout file. That is to say, each set of command statements, each set of objects or each section of contents of a layout file are described as one content block unit so as to divide the document contents of the layout file into content blocks. Specifically, the statement number, statement length, statement offset, object identifier, object offset, content identifier, content offset or certain special symbols may be considered for dividing the document contents of the layout file into various content blocks, according to document content structure information and/or document layout exhibition information. It allows the contents in different divided content blocks to overlap each other and each of the divided content blocks may be assigned with a unique serial number.

For example, a plurality of command statements forming a layout file are divided into a plurality sets of command statements. Each set of the command statements serve as a content block unit, and the result of dividing into content blocks is described to obtain content block division result information, wherein the amount of command statements in each set of command statements is determined according to the document content structure information and/or the document layout exhibition information.

For another example, a plurality of objects forming a layout file are divided into a plurality sets of objects. Each set of the objects serve as a content block unit, and the result of dividing into content blocks is described to obtain content block division result information, wherein the amount of objects in each set of objects is determined according to the document content structure information and/or the document layout exhibition information.

For a further example, a plurality of contents forming a layout file are divided into a plurality sets of contents. Each set of the contents serve as a content block unit, and the result of dividing into content blocks is described to obtain content block division result information, wherein the amount of contents in each set of contents is determined according to the document content structure information and/or the document layout exhibition information.

In addition, the document contents of a layout file can be divided into content blocks by a method of dividing a content reference sequence. Specifically, the content reference sequence forming a layout file is obtained firstly. The so-called content reference sequence refers to an ordered sequence formed by arranging various graphic elements (such as texts, pictures, tables and the like) in document contents of a layout file according to a certain order. The order may be either a sequential order of graphic elements in the content data flow of the layout file or a certain ergodic order of a document tree structure. Then, the obtained content reference sequence is divided into a plurality of ordered content reference sub-sequences in a certain manner. Each of the divided content reference sub-sequences serves as a content block. The amount of sequences in each content reference sub-sequence is determined according to the document content structure information and/or the document layout exhibition information. Then, the result of dividing into content blocks is described to obtain content block division result information. It allows the contents in different content reference sub-sequences to overlap each other and each of the divided content reference sub-sequences may be assigned with a unique serial number. The content reference sequence may be divided by using the offset positions of graphic elements in the content reference sequence. Also, the content reference sequence may be divided either according to the positions of one or more special graphic element symbols in the content reference sequence or according to the positions of one or more identifiers in the content reference sequence.

According to the above result of dividing content blocks, the content block division result information of the layout file is described, wherein for example, structurized marking languages (e.g. XML language, SGML language, and the like) may be used for describing the content block division result information.

Step 104 is to creat the document flow information for the layout file according to the result of dividing into content blocks.

The operation of describing the document flow information of the layout file based on the divided content blocks refers to describing document flow information of the content blocks themselves and the relationship among the content blocks, including document structure information, reading clue information, layout information and the like. For example, the XML language or SGML language may be used for describing the document flow information of the layout file based on the divided content blocks. For example, the layout file may be a PDF file.

Particularly, the content block division result information obtained by the above description may be associated with the document content structure information and/or document layout exhibition information. The associated content block division result information and the document content structure information and/or document layout exhibition information may be stored correspondingly. In addition, the content block division result information and the document content structure information and/or document layout exhibition information may be either stored separately from the layout file or embedded in the layout file to serve as a data block in the layout file.

A structurized marking language may be used to describe the obtained content block division result information and document flow information.

Step 105 is to process the structure of the layout file according to the document flow information.

By obtaining document flow information of a layout file, the document contents of the layout file are divided into content blocks according to the obtained document flow information. Then, by describing content block division result information, the document flow information of the layout file based on the divided content blocks is described according to the content block division result information, so as to easily process the structure of the layout file. For example, after document contents are modified, it is easy to update information of the layout file, such as the document structure, layout arrangement, and the like. Therefore, it is more flexible and easier to perform edtion operations (such as searching, structurized storing, modifying, extracting, layout-rearranging, and the like) on contents of the layout file.

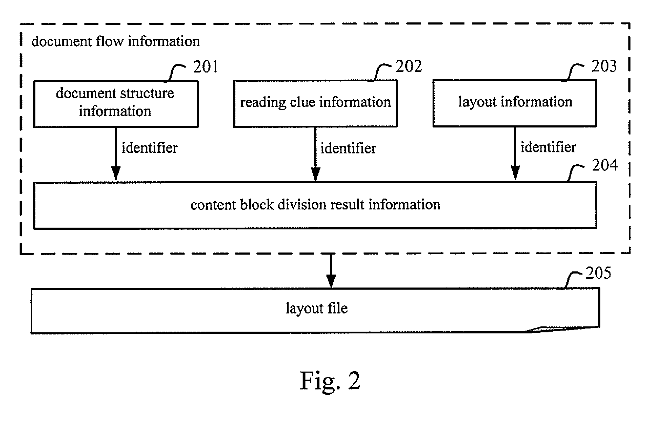

Fig. 2 is a schematic view of describing document flow information of a layout file based on divided content blocks according to the method of the presnt invention. The document contents of a layout file 205 are divided into a plurality of content blocks, and a structurized marking language is used to describe the content block division result information 204. According to the content block division result information 204, the document flow information of the layout file 205 based on the divided content blocks are described. Document content structure information and/or the document layout exhibition information include document structure information 201, reading clue information 202 and layout information 203. In this embodiment, the content block division result information 204 and document flow information (including the relationship among the content block division result information 204 and each of the document structure information 201, the reading clue information 202 and the layout information 203 of the layout file 205 based on the divided content blocks) are stored separately from the layout file 205. In this embodiment, the document flow information is an index structure which reflects the relationship among the content block division result information 204 and each of the document structure information 201, the reading clue information 202, and the layout information 203.

A more detailed embodiment will be given below.

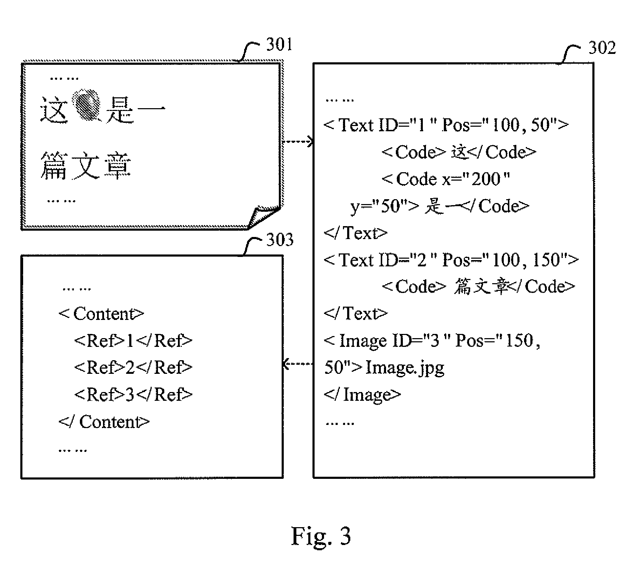

Fig. 3 shows a layout file 301 and its document content descriptions 302 and 303. The layout file 301 includes text objects and graphic element objects. The content definitions of the text objects and graphic element objects of the layout file are shown in 302. Each content definition has an object identifier (ID) in the layout file. In 303, the defined graphic element objects or text objects are used in the layout file according to the object identifiers (IDs) so that the graphic element objects and text objects defined in 302 are displayed when the layout file is displayed.

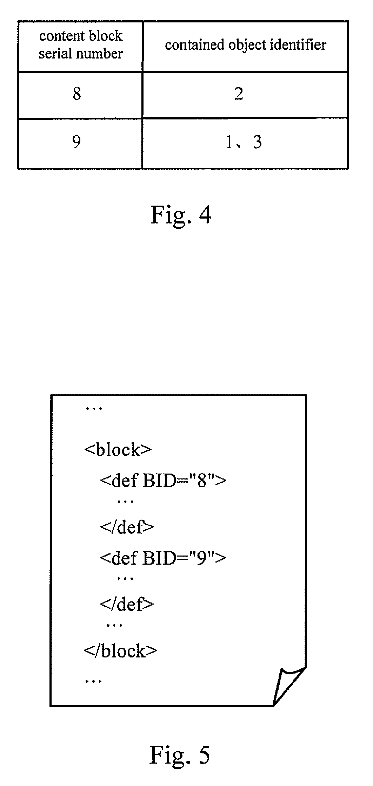

Figs. 4 and 5 are schematic views showing an embodiment in which the document contents of the layout file 301 are divided into content blocks and content block division result information is described after the layout file 301 of Fig. 3 is computed via an intelligent comprehension algorithm to obtain the document content structure information and/or the document layout exhibition information corresponding to the layout file 301. Fig. 4 shows a manner in which the document contents of the layout file are divided into content blocks. According to the manner in which different objects forming a layout file are divided into different content blocks, the graphic element objects with identifiers 1 and 3 in the layout file 301 are divided into one content block of which the serial number is 9, and the graphic element object with identifier 2 in the layout file 301 is divided into one content block of which the serial number is 8. Fig. 5 is a schematic view showing that the content block division result information is described with XML language.

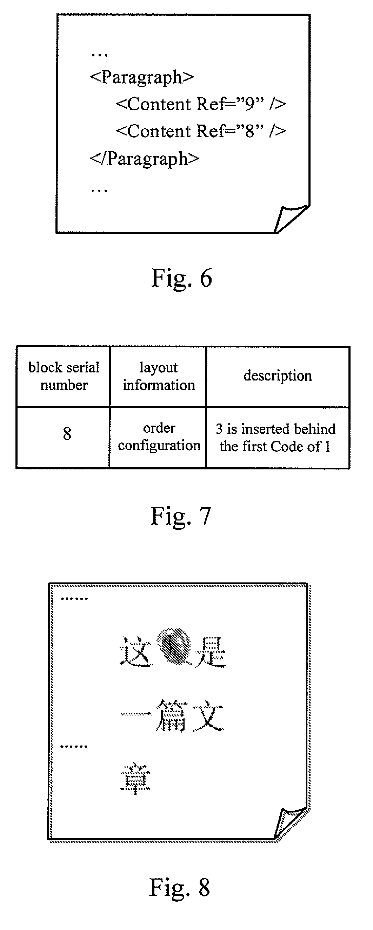

Figs. 6 and 7 are schematic views showing the document flow information for a layout file based on the divided content blocks. Fig. 6 shows the document structure information of the document flow information for a layout file based on the divided content blocks. The document structure information defines a chapter tree of the document and orders of content blocks within the respective chapters (shown with content block serial number in Fig. 6). Specifically, Fig. 6 declares a paragraph in a layout file, which includes the content blocks with serial numbers 8 and 9. Fig. 7 is a schematic view of the self-adaption exhibition information of the document layout of the document flow information for a layout file based on the divided content blocks. Fig. 7 shows a manner of adjusting the order of the text object with the object identifier 1 and the graphic element object with the object identifier 3 in the content block with the serial number 9. As shown in Fig. 7, the graphic element object with the object identifier 3 is inserted behind the first character of the text object " 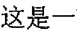 " with the object identifier 1.

Fig. 8 is a schematic view showing the rearrangement for the contents of the document layout of the document flow information of the layout file as shown in Fig. 3 divided into content blocks according to an embodiment of the present invention. The results of Figs. 3-7 may be used to rearrange the section of contents so as to obtain the result of Fig. 8. During the rearrangement, firstly, a paragraph structure is obtained according to Fig. 6. It is learned from the paragraph structure that the content block 9 is placed before the content block 8 to form the sequence " 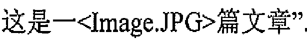 ". Then, according to the order information of Fig. 7, the sequence is adjusted as " 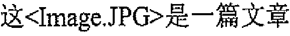 ". In this way, flow information is used to obtain correct contents. And, the layout is rearranged based on the dimensions (three-character-wide) of the layout to obtain the result shown in Fig. 8. In this embodiment, the extraction and rearrangment of contents are realized according to a layout file and the flow information obtained by previous processing. According to this embodiment, it is more flexible and easier to perform edtion operations (such as searching, structurized storing, modifying, extracting, layout-rearranging, and the like) on contents of the layout file.

Reading clue information is a kind of specific document content structure information, which may be either directly obtained from existing document content structure information or defined by a user. The manner of processing the reading clue information is consistent with that of processing the document content structure information. Therefore, the examples of reading clue information are omitted.

Alternatively, the processing in structure of Step 105 may include at least one of the operations of searching, structurized storing, modifying, extracting and layout-rearranging for contents of a layout file. Specifically, the operations may be performed by operating the content blocks, the document content structure and/or the document layout of the layout file according to the relationship between, described in the document flow information, the content block division result information and the document content structure information and/or the document layout exhibition information.

For example, the searching, structurized storing, modifying and extracting may be performed in the following manner.

Firstly, the flow structure and content flow having a correct order are generated for the corresponding layout document, according to the relationship, described in the document flow information, between the content block division result information and the document content structure information. Then, the sequential access, multi-searching or the like may be used on a flow structure or content flow to search contents, so as to achieve searching, structurized storing, modifying, extracting and the like.

For example, the layout-rearranging may be performed in the following manner.

Firstly, layout information is provided for the corresponding contents in the content flow, according to the relationship, described in the document flow information, between the content block division result information and the document layout exhibition information. A layout algorithm may be used for the layout rearrangement purpose. For example, when a layout file is edited, since correct document flow information is obtained, the document structure, the original order of contents and the edition position of the layout file may be obtained, according to the relationship, described in the document flow information, between the content block division result information and the document layout exhibition information. Edition data may be inserted in a correct position in the document structure information or document content flow, so as to edit easily and rapidly and reconstruct the edited document flow information.

Correspondingly, the embodiments of the present invention also provide a device for processing the structure of a layout file of which the structure is shown in Fig. 8. The device comprises the following modules.

The module 802 for obtaining original information is used to obtain the document content structure information and/or the document layout exhibition information of a layout file. The layout file mentioned herein may refer to either a whole layout file or one or more pages in a whole layout file. The original information of a layout file refers to the document content structure information and/or the document layout self-adaption exhibition information in the layout file, including but not limited to the following three kinds of information.

The first kind of the information is document content structure information, including the chapter information of a document, the sequence of content blocks in a chapter and the sequence of graphic elements in a content block.

The second kind of the information is reading clue information, which refers to additional reading sequence information provided according to specific requirements, except for the reading sequence provided by the document content structure information mentioned above. The reading clue information is optional reading sequence information provided to users and may be either reading sequence information of all document contents of a layout file or reading sequence information of partial document contents of a layout file.

The third kind of the information is layout information, which refers to the information determining the final exhibition effect of the graphic elements when the layout of a layout file is rearranged. The layout information includes the layout attribute of a graphic element itself or a content block itself, and the layout relationship among the graphic elements of a content block or among content blocks, for example, the manner of setting characters off a designated picture and the column information of designated content blocks. The above-mentioned layout rearrangement refers to a process in which the graphic elements in the layout are re-organized according to a certain rule so as to form a layout exhibition result when the layout size or content is changed.

The module 803 for dividing into content blocks is used to divide the document contents of the layout file into content blocks according to the document content structure information and/or the document layout exhibition information.

The module 804 for describing document flow information is used to creat the document flow information of the layout file according to the result of dividing into content blocks.

The module 805 for processing structures is to process the structure of the layout file according to the document flow information.

By obtaining document flow information of a layout file, the document contents of the layout file are divided into content blocks according to the obtained document flow information. Then, by describing content block division result information, the document flow information of the layout file based on the divided content blocks is described according to the content block division result information, so as to easily process the structure of the layout file. For example, after document contents are amended, it is easy to compute of the updated layout and rewrite the layout information of the whole document. Therefore, it is more flexible and easier to perform edtion operations (such as searching, structurized storing, modifying, extracting, layout-rearranging, and the like) on contents of the layout file.

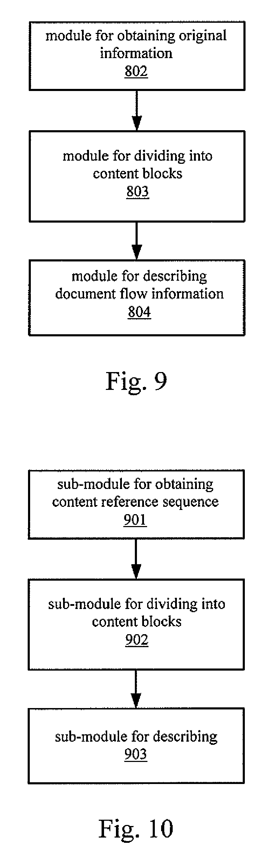

Hereinafter, a detailed description of the operation of the device for processing the structure of a layout file according to the present invention will be given with reference to Fig. 9.

The document flow information of a layout file may be obtained by the module 802 for obtaining original information in at least one of the following manners.

Where an electronic document containing document content structure information and/or document layout exhibition information serves as the document content source for a layout file, the document content structure information and/or the document layout exhibition information of the layout file may be obtained directly by analyzing the source of various document contents of the layout file. For example, for an electronic document (e.g. HTML and Microsoft Word) corresponding to a layout file and containing partial document content structure information and/or document layout exhibition information, the document processing system of the document may be used to extract the document content structure information and/or the document layout exhibition information in the electronic document. Specifically, for a document in Microsoft Word format, Office Automation Object may be used to obtain the document content structure information and/or document layout exhibition information of the document.

Where an electronic document not containing document content structure information and/or document layout exhibition information serves as the document content source for a layout file, various recognition algorithms or intelligent comprehension algorithms may be used to compute the layout file to obtain the document content structure information and/or the document layout exhibition information of the layout file. For example, a processing system based on document analyzation and document comprehension may be used to compute the layout file to obtain the document content structure information and/or the document layout exhibition information of the layout file.

Where an electronic document not containing document content structure information and/or document layout exhibition information serves as the document content source for a layout file, the document content structure information and/or the document layout exhibition information in the layout file may be obtained by receiving the document content structure information and/or document layout exhibition information inputted for the layout file by an user in external. For example, a user may mark the document contents of a layout file via a computer application program having a graphic interface, so as to input the document content structure information and/or the document layout exhibition information of the layout file.

The module 803 for dividing into content blocks divides the document contents of a layout file into content blocks according to the document content structure information and/or the document layout exhibition information. That is to say, each set of command statements, each set of objects or each section of contents of a layout file are described as one content block unit so as to divide the document contents of the layout file into content blocks. Specifically, the statement number, statement length, statement offset, object identifier, object offset, content identifier, content offset or certain special symbols may be considered for dividing the document contents of the layout file into various content blocks, according to the requirements of the document flow information. It allows the contents in different divided content blocks to overlap each other and each of the divided content blocks may be assigned with a unique serial number.

For example, a plurality of command statements forming a layout file are divided into a plurality sets of command statements. Each set of the command statements serve as a content block unit, and the result of dividing into content blocks is described to obtain content block division result information, wherein the amount of command statements in each set of command statements is determined according to the document content structure information and/or the document layout exhibition information.

For another example, a plurality of objects forming a layout file are divided into a plurality sets of objects. Each set of the objects serve as a content block unit, and the result of dividing into content blocks is described to obtain content block division result information, wherein the amount of objects in each set of objects is determined according to the document content structure information and/or the document layout exhibition information.

For a further example, a plurality of contents forming a layout file are divided into a plurality sets of contents. Each set of the contents serve as a content block unit, and the result of dividing into content blocks is described to obtain content block division result information, wherein the amount of contents in each set of contents is determined according to the document content structure information and/or the document layout exhibition information.

With reference to Fig. 10, in order to divide a layout file into a plurality of content blocks, a sub-module 901 for obtaining content reference sequence, a sub-module 902 for dividing into content blocks, and a sub-module 903 for describing may be used. The sub-module 901 for obtaining content reference sequence is used to obtain the content reference sequence forming the layout file. The sub-module 902 for dividing into content blocks divides the content reference sequence into a plurality of content reference sub-sequences each serving as a content block. The amount of sequences in each content reference sub-sequence is determined according to the document content structure information and/or the document layout exhibition information. It allows the contents in different content reference sub-sequences to overlap each other and each of the divided content reference sub-sequences may be assigned with a unique serial number. The sub-module 903 for describing is used to describe the result of dividing into content blocks to obtain content block division result information. It allows the contents in different content reference sub-sequences to overlap each other and each of the divided content reference sub-sequences may be assigned with a unique serial number. The content reference sequence may be divided by using the offset positions of graphic elements in the content reference sequence. Also, the content reference sequence may be divided either according to the positions of one or more special graphic element symbols in the content reference sequence or according to the positions of one or more identifiers in the content reference sequence.

According to the above result of dividing content blocks, the content block division result information of the layout file is described, wherein for example, structurized marking languages (e.g. XML language, SGML language, and the like) may be used for describing the content block division result information.

The module 804 for describing document flow information is used to creat the document flow information of the layout file according to the content block division result information. The operation of describing the document flow information of the layout file based on the divided content blocks refers to describing document flow information of the content blocks themselves and the relationship among the content blocks, including document structure information, reading clue information, layout information and the like. For example, the XML language or SGML language may be used for describing the document flow information of the layout file based on the divided content blocks.

Particularly, the content block division result information may be associated with the document content structure information and/or document layout exhibition information. The associated content block division result information and the document content structure information and/or document layout exhibition information may be stored correspondingly. Specifically, the content block division result information and the document flow information may be either stored separately from the layout file or embedded in the layout file to serve as a data block in the layout file.

A structurized marking language may be used to describe the obtained content block division result information and document flow information.

In practical applications, the stored content block division result information and document flow information may be transferred to other storage devices by forwarding or copying, so that other user terminals can directly and conveniently use the document flow information of the layout file based on the divided content blocks.

In addition, external systems interacting with the device for processing the structure of a layout file according to embodiments of the present invention may be a format converting system, layout rearrangement system and so on. These systems use the document flow information of the layout file based on the divdied content blocks to further process the layout file, such as information extracting, page rearranging, converting to another format, and the like.

Alternatively, the processing in structure of a layout file according to the document flow information may include at least one of the operations of searching, structurized storing, modifying, extracting and layout-rearranging for contents of a layout file. Specifically, the operations may be performed by operating the content blocks, the document content structure and/or the document layout of the layout file according to the relationship, described in the document flow information, between the content block division result information and the document content structure information and/or the document layout exhibition information.

For example, a module 805 for processing structure may be used to perform the searching, structurized storing, modifying and extracting in the following manner.

Firstly, the flow structure and content flow having a correct order are generated for the corresponding layout document, according to the relationship, described in the document flow information, between the content block division result information and the document content structure information. Then, the sequential access, multi-searching or the like may be used on a flow structure or content flow to search contents, so as to achieve searching, structurized storing, modifying, extracting and the like.

For example, the module 805 for processing structure may bu used to perform layout rearranging in the following manner.

Firstly, layout information is provided for the corresponding contents in the content flow, according to the relationship, described in the document flow information, between the content block division result information and the document layout exhibition information. A layout algorithm may be used for the layout rearrangement purpose. For example, when a layout file is edited, since correct document flow information is obtained, the document structure, the original order of contents and the edition position of the layout file may be obtained, according to the relationship, described in the document flow information, between the content block division result information and the document layout exhibition information. Edition data may be inserted in a correct position in the document structure information or document content flow, so as to edit easily and rapidly and reconstruct the edited document flow information.

From the above, the above embodiments of the present invention provide methods and devices for processing the structure of a layout file. By using one of the methods or devices, the document flow information of a layout file is obtained. According to the obtained document flow information, the document contents of the layout file are divided into content blocks. Then, the content block division result information is described. According to the obtained content block division result information, the document flow information of the layout file based on the divided content blocks is described, so that the layout of the layout file is not required to be recomputed and the layout information of the whole document is not required to be rewritted after the contents of the layout file are amended. Therefore, it is easy to process the structure of the layout file. For example, it is more flexible and easier to perform the edtion operations (such as searching, structurized storing, modifying, extracting, layout-rearranging, and the like) on contents of the layout file.

The present invention is not limited to the descriptions and embodiments mentioned above. Variations and modification made by those skilled in the art according to the disclosure herein should be within the scope of the present invention.

## Claims

1. A method for processing a structure of a layout file, comprising:
obtaining document content structure information and/or document layout exhibition information of the layout file;
dividing document contents of the layout file into content blocks according to the document content structure information and/or the document layout exhibition information;
creating document flow information for the layout file according to the divided content blocks; and
processing the structure of the layout file according to the document flow information.

2. The method according to claim 1, wherein the document content structure information and/or the document layout exhibition information of the layout file is obtained by at least one of the following steps:
obtaining the document content structure information and/or the document layout exhibition information according to one or more sources of the document contents of the layout file;
obtaining the document content structure information and/or the document layout exhibition information by computing the layout file; and
obtaining the document content structure information and/or the document layout exhibition information by receiving an external input.

3. The method according to claim 1, wherein the step of dividing document contents of the layout file into content blocks according to the document content structure information and/or the document layout exhibition information is performed by one of the following steps:
dividing a plurality of command statements forming the layout file into a plurality sets of command statements, wherein each set of the command statements serve as a content block unit, a result of dividing into content blocks is described to obtain content block division result information, and the amount of command statements in each set of the command statements is determined according to the document content structure information and/or the document layout exhibition information;
dividing a plurality of objects forming the layout file into a plurality sets of objects, wherein each set of the objects serve as a content block unit, a result of dividing into content blocks is described to obtain content block division result information, and the amount of objects in each set of the objects is determined according to the document content structure information and/or the document layout exhibition information; and
dividing a plurality of contents forming the layout file into a plurality sets of contents, wherein each set of the contents serve as a content block unit, a result of dividing into content blocks is described to obtain content block division result information, and the amount of contents in each set of the contents is determined according to the document content structure information and/or the document layout exhibition information.

4. The method according to claim 1, wherein the step of dividing document contents of the layout file into content blocks according to the document content structure information and/or the document layout exhibition information comprises:
obtaining a content reference sequence forming the layout file;
dividing the obtained content reference sequence into a plurality of content reference sub-sequences each serving as a content block, wherein the amount of sequences in each content reference sub-sequence is determined according to the document content structure information and/or the document layout exhibition information; and
describing a result of dividing into content blocks to obtain content block division result information.

5. The method according to claim 3 or 4, wherein the step of creating document flow information of the layout file according to the divided content blocks comprises:
describing a relationship between the content block division result information and the document content structure information and/or the document layout exhibition information to obtain the document flow information.

6. The method according to claim 5, wherein the obtained content block division result information and the document flow information are described with a structurized marking language.

7. The method according to claim 5, wherein the step of processing the structure of the layout file according to the document flow information comprises at least one of the operations of searching, structurized storing, modifying, extracting and layout-rearranging for contents of the layout file, and the operations can be performed by operating the content blocks, the document content structure and/or the document layout of the layout file according to the relationship, described in the document flow information, between the content block division result information and the document content structure information and/or the document layout exhibition information.

8. A device for processing a structure of a layout file, comprising:
a module for obtaining original information, which is used to obtain document content structure information and/or document layout exhibition information of the layout file;
a module for dividing into content blocks, which is used to divide document contents of the layout file into content blocks according to the document content structure information and/or the document layout exhibition information;
a module for describing document flow information, which is used to creat document flow information for the layout file according to the divided content blocks; and
a module for processing the structure, which is used to process the structure of the layout file according to the document flow information.

9. The device according to claim 8, wherein the document content structure information and/or the document layout exhibition information of the layout file is obtained by the module for obtaining original information in at least one of the following manners:
obtaining the document content structure information and/or the document layout exhibition information according to one or more sources of the document contents of the layout file;
obtaining the document content structure information and/or the document layout exhibition information by computing the layout file; and
obtaining the document content structure information and/or the document layout exhibition information by receiving an external input.

10. The device according to claim 8, wherein,
the module for dividing into content blocks divides a plurality of command statements forming the layout file into a plurality sets of command statements, wherein each set of the command statements serve as a content block unit, a result of dividing into content blocks is described to obtain content block division result information, and the amount of command statements in each set of the command statements is determined according to the document content structure information and/or the document layout exhibition information;
the module for dividing into content blocks divides a plurality of objects forming the layout file into a plurality sets of objects, wherein each set of the objects serve as a content block unit, a result of dividing into content blocks is described to obtain content block division result information, and the amount of objects in each set of the objects is determined according to the document content structure information and/or the document layout exhibition information; or
the module for dividing into content blocks divides a plurality of contents forming the layout file into a plurality sets of contents, wherein each set of the contents serve as a content block unit, a result of dividing into content blocks is described to obtain content block division result information, and the amount of contents in each set of the contents is determined according to the document content structure information and/or the document layout exhibition information.

11. The device according to claim 8, wherein the the module for dividing into content blocks comprises:
a sub-module for obtaining content reference sequence, which is used to obtain a content reference sequence forming the layout file;
a sub-module for dividing into content blocks, which is used to divide the obtained content reference sequence into a plurality of content reference sub-sequences each serving as a content block, wherein the amount of sequences in each content reference sub-sequence is determined according to the document content structure information and/or the document layout exhibition information; and
a sub-module for describing, which is used to describe a result of dividing into content blocks to obtain content block division result information.

12. The device according to claim 10 or 11, wherein the module for describing document flow information describes a relationship between the content block division result information and the document content structure information and/or the document layout exhibition information to obtain the document flow information.

13. The device according to claim 12, wherein the obtained content block division result information and the document flow information are described with a structurized marking language.

14. The device according to claim 1, wherein the module for processing the structure processes the structure of the layout file according to the document flow information by the operations of searching, structurized storing, modifying, extracting and layout-rearranging for contents of the layout file, and the operations can be performed by operating the content blocks, the document content structure and/or the document layout of the layout file according to the relationship, described in the document flow information, between the content block division result information and the document content structure information and/or the document layout exhibition information.
